# EUROPEAN PATENT APPLICATION

(11) **EP 4 664 685 A1**
(43) Date of publication of application: **17.12.2025**
(21) Application number: 24181496.1
(22) Date of filing: 11.06.2024
(51) Int. Cl.: H01R 4/18, H01R 4/60, H01R 43/00, H01R 13/6463, H01R 13/6591, H01R 43/28

(54) **CRIMPABLE BRIDGE CONTACT FOR A HIGH SPEED TWINAXIAL REPAIR KIT**

(71) Applicant: Aptiv Technologies AG, 8200 Schaffhausen (CH)
(72) Inventor: DROESBEKE, Gert, 8200 Schaffhausen (CH)
(74) Representative: Bardehle Pagenberg Partnerschaft mbB Patentanwälte Rechtsanwälte

(57) **Abstract**

A cable repair set comprising a crimpable bridge contact, the bridge contact comprising at least one elongated terminal portion, each terminal portion comprising first and second crimp portions arranged in series, the crimp portions comprising crimping wings, two tool alignment portions, connected to the respective opposing ends of the elongated terminal portion, wherein each alignment portion comprises at least one tool alignment means.

## Description

### 1. Field of the invention

This invention relates to an electrical connector repair kit in which defective cables within a twisted pair cabling can be repaired instead of being replaced, and a method thereof.

### 2. Background

In modern automotive applications the need for robust data transmission is ever increasing, as the number of sensors and actuators inside a vehicle is rising. Signal transmission cables, including twisted pair or twinaxial cables are fundamental components in data transmission, facilitating the flow of information across short and long distances. These cables are designed to transmit signals with minimal loss and interference, ensuring that data communication is reliable and efficient.

Increasing data transmission rates increase the impact of mechanical tolerances on signal integrity, leading to significant offsets and mismatches from the optimal cable impedance, causing increased signal reflections, losses, or corruption. Furthermore, higher transmission speeds require the introduction of shielding, where the precision of the shielding becomes critical with increased signal frequencies. Signal transmission cables can suffer from various forms of damage, including physical wear and tear. Typically, this requires a displacement of the whole cable, as there is basically no length difference allowed between the wires of e.g. a twinaxial and/or differential cable pair to maintain signal integrity. The integrity and performance of these cables directly impacts the quality and reliability of the signal transmission, underlining the importance of their maintenance and repair.

In view of the foregoing, there is a need for a repair kit that enables the repair of a broken cable, while facilitating the assurance that the repaired cable has the correct length according to the desired specifications. Another aspect is to provide a solution for, e.g., connecting a new cable end to an existing functional cable end of a twinaxial/differential pair cable in a vehicle, while ensuring that there's little to no length difference between the wires of the cable to maintain signal integrity. It is thus an object of the present invention to overcome some or all the deficiencies of the current state of the art by providing such a repair kit and a method of applying it to ensure that there's little to no length difference between the wires of a twinaxial/differential pair cable after repairing.

### 3. Summary

The above objects are at least partially achieved by the subject matter of independent claim 1. Preferred embodiments are the subject of the dependent claims, and the skilled person will find clues to other suitable aspects of the present invention in the overall disclosure of the present application.

An aspect of the invention relates to a cable repair set comprising a crimpable bridge contact. The bridge contact comprises at least one elongated terminal portion, and each terminal portion comprises first and second crimp portions arranged in series, like e.g., on opposing ends of the terminal portion. The crimp portions comprise crimping wings and two tool alignment portions, connected to the respective opposing ends of the elongated terminal portion, wherein each alignment portion comprises at least one tool alignment means.

An embodiment of this invention might be used in situations when a cable has been damaged and needs a new connection point or needs to be rejoined. The crimpable bridge contact allows for a secure and stable electrical connection to be made between separate cable ends or sections without soldering. The crimping wings ensure a tight fit around the cable's conductor, enhancing the connection's reliability and conductivity. The tool alignment portions are particularly beneficial, as they can align a crimping tool at the correct position, ensuring that the crimping process is performed accurately and effectively. This simplifies the repair process and makes it more accessible to assemblers and/or repairers with varying levels of technical skill, but also increases the overall quality and durability of the repair. Each crimp portion might be comprising an L-shaped crimp with a dedicated area for mechanical crimping and a dedicated area for electrical crimping.

Another aspect of the invention could be embodied, when the two tool alignment portions are detachably connected via breaking points.

Breaking points are predetermined weak spots designed to allow the alignment portions to be easily removed or broken off without damaging the rest of the bridge contact and preferably the need for additional tools. This allows for the temporary use of tool alignment portions during the installation or repair process. The alignment portions assist in guiding the crimping tool to the correct position on the bridge contact, ensuring that a precise and secure crimp is achieved. Once the crimping process is completed, these alignment portions can be removed by applying a light force manually or by means of a suitable tool, leaving behind a connection without any unnecessary and potentially damaging protrusions. The alignment portions can also be removed by angling them in relation to the crimp portions, since as such the initial crack introduced in the sheet metal material at the breaking points will grow until the entire material thickness is completely ruptured. This feature is especially advantageous in applications where space is limited or where any protruding parts could interfere with other components, thus the detachable nature of alignment portions via breaking points simplifies post-crimping procedure.

Another embodiment is achieved, when at least one tool alignment means comprises a through hole.

This facilitates the alignment and application of crimping tools or other devices used in the installation or repair of cables. For example, a crimping tool or a guide pin can be inserted through the through hole to ensure that the tool aligns perfectly with the terminal portions of the bridge contact, ensuring an accurate crimp.

Furthermore, the bridge contact can comprise two elongated terminal portions arranged in parallel to each other.

Such an embodiment enables the bridge contact to facilitate connections between two separate cable ends simultaneously, maintaining a compact and efficient design. The parallel arrangement of the elongated terminal portions allows for dual connections to be made in close proximity, which is particularly useful in applications where space is limited or where multiple connections need to be made within a single component. The parallel configuration of the terminal portions can enhance the mechanical stability and electrical performance of the connection. By providing two points of contact, the bridge contact can distribute the mechanical load and electrical current more evenly, resulting in a more reliable and durable connection. This arrangement is especially advantageous in harsh environments, as it can help prevent connection failures over time and it is particularly suitable for the repair of twisted pair cables.

A further aspect of the invention is realized, when the bridge contact comprises a first axis of symmetry in the axial direction of the elongated terminal portion, with one crimp portion and one adjacent alignment portion being symmetrical to the respective other crimp portion and alignment portion.

The symmetrical design means that the bridge contact can be used in either orientation, which simplifies the installation process since there is no need to determine a specific direction for correct placement. This can reduce the time and potential for error during the repair of cables. Moreover, the symmetry along the axial direction ensures that the mechanical and electrical properties are evenly distributed across the bridge contact. This can lead to a more reliable electrical connection because the symmetrical design promotes even stress distribution during crimping and use, reducing the likelihood of mechanical failure.

Another embodiment of the invention is achieved, when the bridge contact comprises a second axis of symmetry, preferably at an angle of between 45 and 135 degrees, and most preferably 90°, to the first axis of symmetry.

With two axes of symmetry at specified angles, the bridge contact can be oriented in multiple ways during installation, making it adaptable to a wide range of repair or construction scenarios. The angles between the axes of symmetry can contribute to optimizing the distribution of mechanical stress and electrical load across the bridge contact. This can lead to improved durability and reliability of the connection, as the symmetrical design helps to ensure that no single part of the bridge contact is disproportionately subjected to stress. Such a dual-symmetry design also ensures that the electrical characteristics are consistent, not depending on the orientation of the bridge contact. This is important for maintaining stable and predictable electrical performance in the systems where these contacts are used.

Another embodiment of the invention is achieved, when combining the crimpable bridge contact with a crimping tool, wherein the alignment means are adapted for aligning the crimping tool.

This embodiment ensures a high degree of precision and efficiency in cable repairs or installations. The alignment means, which may include through holes or other guiding structures, interact directly with the crimping tool. This interaction is designed to guide the tool into the exact position needed for optimal crimping, thus facilitating a more secure and effective electrical connection. This feature is ensuring that the crimping wings on the terminal portions of the bridge contact are properly engaged with the cable, thus ensuring a tight and secure mechanical and electrical bond. By simplifying the alignment process, it reduces the potential for user error and increases the consistency of the crimping results.

Another embodiment of the invention is achieved, when crimpable bridge contact comprises at least one stopping means, configured and dedicated to position the wire ends at the stopping means for alignment.

Such a stopping means ensures that the wires are accurately and consistently positioned relative to the bridge contact, facilitating correct alignment before crimping. This offers a significant advantage by providing a physical barrier or guide that helps ensure the wire ends are not inserted beyond a certain point, promoting uniformity and precision in the placement of the wires. This feature is particularly beneficial during the crimping process as it aids in achieving optimal electrical contact and mechanical stability. The presence of a stopping means reduces the likelihood of errors that could arise from improper wire positioning, such as incomplete crimping or uneven electrical connections, which could compromise the performance of the cable repair.

Another aspect of the invention relates to a method of repairing a signal transmission cable, comprising the steps of providing a cable repair set, providing a first signal transmission cable, arranging a wire or wires of the first signal transmission cable in a first crimp portion, providing a crimping tool, aligning the crimping tool with the alignment means and crimping the wire or wires onto the first crimp portion by means of the crimping wings.

This method offers an efficient approach to cable repair, particularly for signal transmission cables that are critical in automotive data transfer and/or electronic systems. The steps ensure that the repair is done with precision, resulting in a high-quality connection that can reliably transmit signals. This method is advantageous because it allows for rapid repairs, minimizes downtime, and ensures the integrity of the signal transmission, all while being accessible to assemblers and/or repairers with different levels of technical expertise.

This method of repairing a signal transmission cable can be improved, so that the bridge contact comprises two elongated terminal portions arranged in parallel to each other and the signal transmission cable is a twisted pair cable comprising two wires, and wherein each wire is arranged in a respective first crimp portion of the two elongated terminal portions.

This method ensures that each wire is individually connected to its own terminal portion, allowing for the repair and/or extension of the twisted pair cable while maintaining its structural integrity and functional properties. This method is particularly beneficial for repairing and/or extending twisted pair cables, which are widely used due to their effectiveness in minimizing signal interference. By ensuring that each wire of the twisted pair is individually crimped to a separate terminal portion, the method preserves the twisted pair's inherent advantages, e.g., reduced crosstalk and electromagnetic interference. This can ensure the maintenance of high-quality signal transmission. This method offers a solution for repairing twisted pair cables, taking into account the challenges and requirements associated with these types of cables. It ensures a reliable and effective repair, which is important for maintaining the integrity and performance of the data transmission.

This method can be further refined when the method comprises further steps of providing a second signal transmission cable in form of a twisted pair cable comprising two wires and arranging each wire of the second signal transmission cable in a respective second crimp portion of the two elongated terminal portions, to realize an electrical connection between the two signal transmission cables.

By placing the (two) wires of the first cable in the first crimp portions and the (two) wires of the second cable in the second crimp portions, this method effectively realizes an electrical connection between the two signal transmission cables. This is particularly useful for extending the length of a cable or joining two sections of a cable upon repairing. The bridge contact with two parallel terminal portions facilitates a direct and efficient electrical connection between the two cables while maintaining the twisted pair structure, in particular its exact length, which is crucial for minimizing signal interference and maintaining the integrity of the signal transmission.

A further aspect of the invention can be realized, when the electrical impedance of two respectively electrically connected wires arranged in one terminal portion is the same as the electrical impedance of the respective other pair of electrically connected wires arranged in the parallel second terminal portion after the crimping step.

The electrical impedance is a critical factor in signal transmission, as it affects the transmission's efficiency and the quality of the signal being transmitted. Impedance mismatch can lead to signal reflection, loss, and degradation, which are undesirable in any signal transmission system. The method ensures that the repair or extension of twisted pair cables not only restores physical and electrical connections but also maintains the proper impedance characteristics of the cable. This is achieved by carefully arranging and crimping the wires of the two cables onto the respective terminal portions of the bridge contact in such a way that the impedance of the connections made on one terminal portion is the same as that on the other. This thereby achieved matching of impedance ensures that the signal can flow smoothly through the repaired or extended section of the cable without experiencing the negative effects of impedance mismatch.

This method of repairing a signal transmission cable can be further improved, when the signal transmission cable comprises a conductive shielding, preferably a metal foil shield, when the method comprises the further steps of providing a ferrule and arranging the ferrule onto the cable jacket of one signal transmission cable and thereafter folding the conductive shields over the ferrule.

This addresses cables that include a conductive shielding, such as a metal foil shield, which is common in many signal transmission cables to reduce electromagnetic interference. The method introduces additional steps related to managing this shielding during the repair process to ensure, that the integrity and effectiveness of the shield is maintained after the repair. The step of "providing a ferrule" is clear to the skilled person: A ferrule can be a ring or cap, typically made of metal or plastic, that is used to encase, reinforce, or seal the end of a cable. In the context of the invention, it is used to support and protect the cable and its shielding during and after the repair process. The step of "arranging the ferrule onto the cable jacket of one signal transmission cable" could involve sliding the ferrule over the outer jacket of the cable, positioning it near the area where the cable is to be repaired or connected. The ferrule might also be realized as a set of crimp wings, crimped around the cable jacket. In this case, the ferrule does not slide over the outer jacket of the cable but is crimped instead. The ferrule provides structural support for the cable and its shielding. The ferrule also provides cable strain relief. The step of "folding the conductive shields over the ferrule" can be executed once a ferrule is in place, as then the conductive shielding (e.g., metal foil shield) that surrounds the cable can be folded over the ferrule. This step is important for maintaining the continuity and effectiveness of the shielding.

Furthermore, the method of repairing a signal transmission cable can be improved, when the two signal transmission cables comprise a conductive shielding, preferably a metal foil shield, when the method comprises the further steps of providing two ferrules and arranging a ferrule onto the cable jacket of each one of the two signal transmission cables, thereafter folding the conductive shields over the ferrules; and then electrically connecting the two conductive shields of the two signal cables with each other to achieve shielding continuity.

The step of "electrically connecting the two conductive shields of the two signal cables with each other to achieve shielding continuity" involves creating an electrical connection between the shields of the two cables. This connection is crucial for maintaining a continuous protection against electromagnetic interference across the cables.

This method of repairing a signal transmission cable can be further improved, when the method comprises the steps of providing a conductive housing and housing the bridge contact so that the ferrules are conductively connected by the conductive housing to achieve the shielding continuity.

The step of "providing a conductive housing" means, that a conductive housing is introduced as part of the repair set-up. This housing is made of or coated with a conductive material and is designed to encase the bridge contact area where the two cables are connected. The step of "housing the bridge contact" indicates that the bridge contact, where the two signal transmission cables are connected and where the ferrules have been previously placed and the conductive shields folded over, is then placed within the conductive housing. This step ensures that the bridge contact, along with the crimped connections and ferrules, is fully enclosed by the conductive material of the housing. The conductive housing ensures that the ferrules, and thus the conductive shields of the two cables, are electrically connected with each other through the housing. This connection is essential for maintaining continuity of the shielding across the connection point, thus preserving the cable's ability to protect against electromagnetic interference effectively.

This method can be further improved when after arranging of the housing, the housing is sealed with a heat shrink tube for insulation, the heat shrink tube preferably comprising a melt adhesive.

A heat shrink tube is a shrinkable plastic sleeve that is placed over the repair site and then heated, causing it to contract tightly around the conductive housing and cable, creating a protective layer. The inclusion of a melt adhesive inside the heat shrink tube can have two advantages: first, as the tube shrinks, the adhesive melts and can fill any irregularities in and/or around the repair site, thus forming a seal that enhances the protection against moisture, dust, and other environmental influences. Second, the adhesive can help to bond the heat shrink tube to the cable and housing, thus improving the mechanical strength to the repair site.

### 4. Brief description of the figures

In the following, preferred embodiments of the disclosure are disclosed by reference to the accompanying figures.
- Fig. 1:: illustrates a bridge contact according to the invention in a top view.
- Fig. 2:: shows the bridge contact of Fig. 1 when assembled with a cable in a top view.
- Fig. 3:: shows the bridge contact of Fig. 1 when assembled with two cables in a top view.
- Fig. 4:: illustrates the bridge contact of Fig. 3 inside a housing in a top view.
- Fig. 5:: depicts a conductive housing, covering a bridge contact assembled to two cables.
- Fig. 6A:: shows a bridge contact assembled to two cables with one wire each in a cross-sectional view.
- Fig. 6B:: shows a bridge contact assembled to two cables with two wires each in a cross-sectional view.

### 5. Detailed description of the figures

The subsequent sections provide a detailed description of the invention, referencing the accompanying illustrations for clarity. The descriptions represent examples only and are not intended to limit the invention's scope. Identical reference numerals across the figures and text denote the same components. The illustrations may not reflect actual size or scale; their dimensions, proportions, and depictions of elements might be enhanced for better understanding and visual convenience.

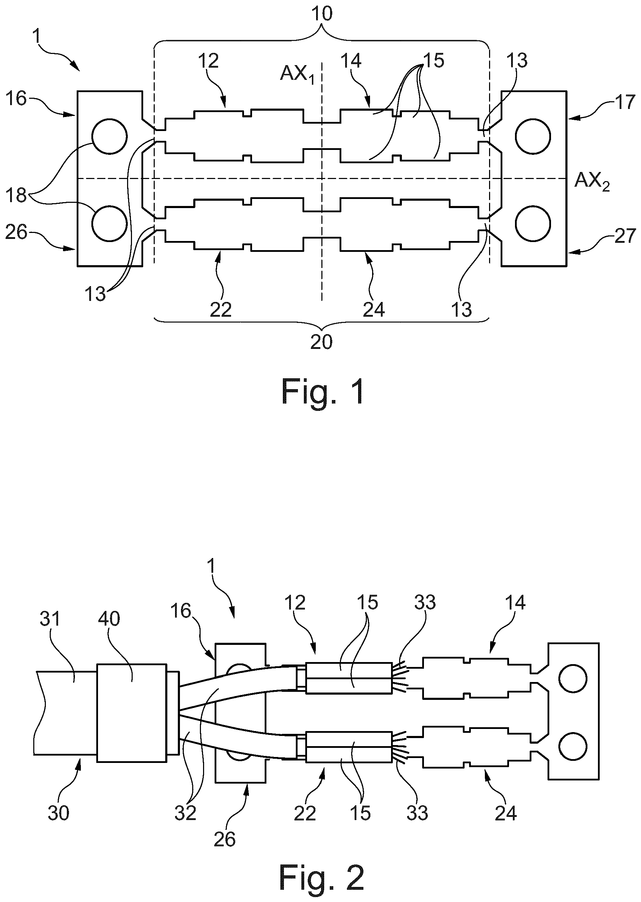

Figure 1 illustrates a bridge contact 1 according to the invention in a top view. In the shown example, the bridge contact comprises two elongated parallel terminal portions 10, 20, which are provided with tool alignment portions 16, 17, 26, 27. The tool alignment portions are connected to the terminal portions via breaking points 13. Each tool alignment portion 16, 17, 26, 27 comprises a through hole 18. Further, the terminal portion 10 comprises a first 12 and second 14 crimp portion. Similarly, the other terminal portion 20 comprises first 22 and second 24 crimp portions. Each crimp portion has four crimping wings 15. As one can see, the bridge contact 1 is symmetrical in the two symmetrical axes AX1 and AX2.

The whole bridge contact 1 is made from a single piece of sheet metal that is stamped to the shape shown in Fig. 1. While the shown embodiment comprises two parallel terminal portions 10, 20, it is also in accordance with the invention to have only one terminal portion, like e.g., only terminal portion 10 with the respective alignment portions 16 and 17.

The dual terminal portion structure allows for an even distribution of mechanical and electrical properties when crimping the respective two wires of two cables on the left and the right side of the bridge contact. The crimping is facilitated by aligning a crimping tool on the alignment portions 16, 17, 26, 27. The wires can be arranged and later crimped to the bridge contact at the crimp portions 12, 14, 22, 24. The breaking points 13 ease the detachment of the alignment portions, which might be no longer needed post-crimping.

Figure 2 shows a bridge contact 1, where the crimp portions 12 are crimped around the wires 32 of a cable. The ferrule 40 is arranged on the cable jacket 30. The right part of the bridge contact is not crimped, and the tool alignment portions 16 are not detached.

Here, a cable 30 with a twisted pair 32 is crimped to the respective first crimp portions 12, 22 of bridge contact 1. The insulation is removed from the tips of the twisted pair 32, and the respective conductive wires (wire strands) 33 are firmly crimped to the crimp portions 12, 22 by means of the crimping wings 15. A ferrule 40 is applied to the cable jacket 31, so that the twisted pair 32 inside the cable 30 cannot be moved relative to each other to facilitate a connection to the bridge contact, without changing the length of the signal transmission line.

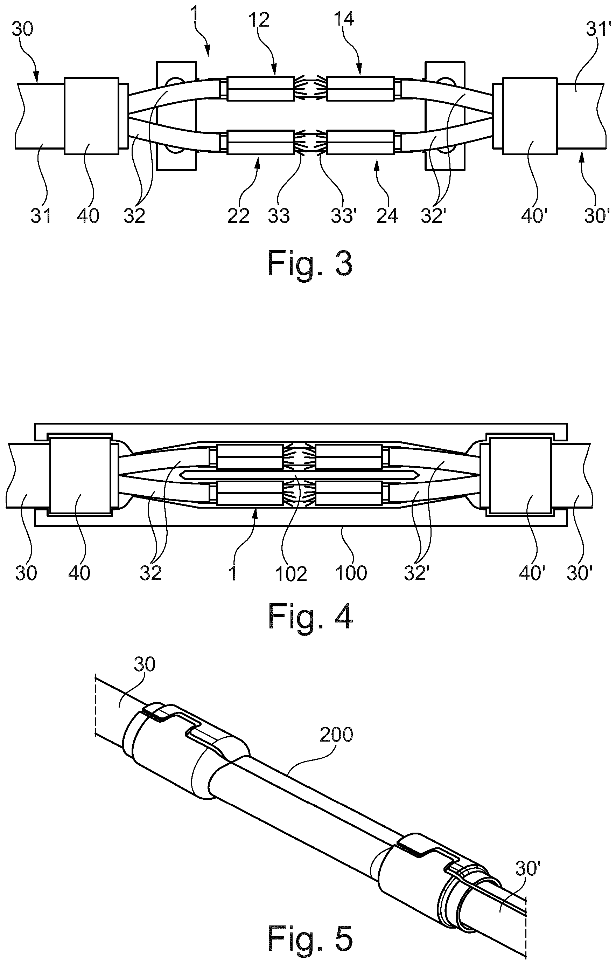

Figure 3 depicts the bridge contact 1 of Figure 2, when two cables 30, 30' with twisted pairs 32, 32' each are crimped onto the crimp portions. The ferrules 40, 40' are attached on the cable jackets 31, 31' and the conductive wires 33 of cable 30 are in electrical contact with the wires 33' of cable 30', due to the bridge contact. Here, the total signal length of the connected cables 30, 30' remains the same, so that the signal transmission through these cables is not subject to distortion.

Figure 4 illustrates the bridge contact 1 of Figure 3 inside a housing 100. The tool alignment portions are detached, so only the crimp portions remain of the bridge contact 1. The terminals inside the housing are electrically isolated by a separation means in form of a web 102.

The housing 100 provides a mechanical barrier and thus protects the repaired cables and the bridge contact inside the housing. It also defines the distance between the wires 32, 32' and ensures electrical insulation.

Figure 5 depicts the conductive housing 200 covering the bridge contact 1 assembled to two cables, where the conductive housing 200 is arranged on the cables 30, 30'. The conductive housing ensures shielding continuity between the shields of the two cables, as it provides an electrically conductive connection between the shields, that are folded over the respective ferrules applied onto the two cables.

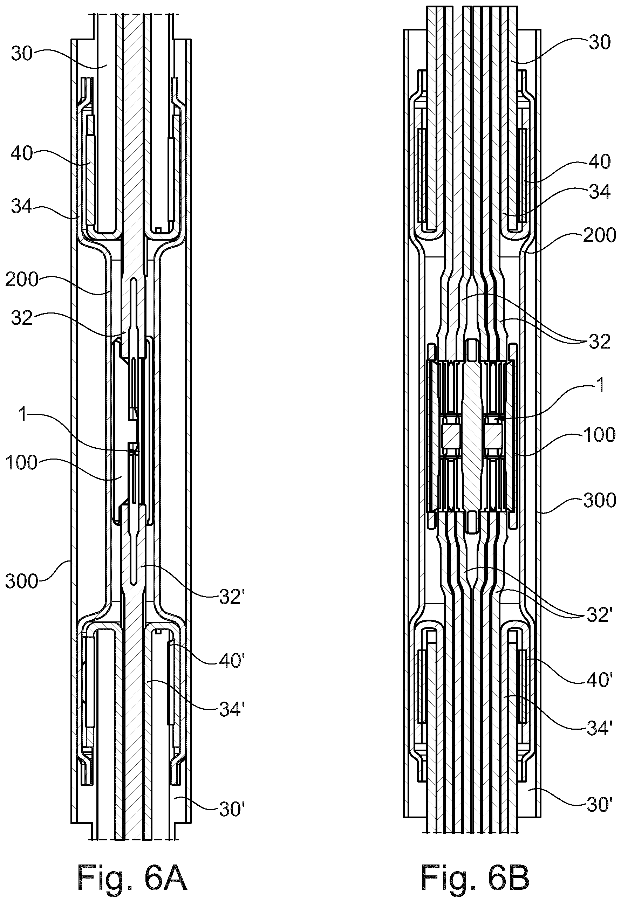

Figure 6A illustrates a cross-sectional view of a bridge contact 1 of Fig. 5 showing a conductive shielding 34, 34'. The housing 100 covers the bridge contact 1. Ferrules 40, 40' are provided onto the cable jackets of the cables, and the conductive shielding 34, 34' is folded back over the respective ferrule 40, 40'. A conductive housing 200 is housing the assembled bridge contact, enabling shielding continuity. Further, a heat shrink tube 300 covers the conductive housing 200.

Figure 6B illustrates the arrangement of Fig. 6A rotated by 90°.

The application of a heat shrink tube provides an additional layer of protection, so that the bridge contact with the crimped wires is enclosed by the housing, the conductive housing electrically connecting the cable shielding and the heat shrink tube, thus providing superior mechanical and electrical protection.

### Reference list:

1: bridge contact
10, 20: terminal portion
12, 14, 22, 24: crimp portion
15: crimping wings
16, 17, 26, 27: tool alignment portion
18: through hole (in tool alignment portion)
13: breaking points
30, 30': cable
31, 31': cable jacket
32, 32': twisted pair
33, 33': conductive wires
34, 34': conductive shielding
40, 40': ferrule
100: housing
102: web
200: conductive housing
300: heat shrink tube
AX1: first axis of symmetry
AX2: second axis of symmetry

## Claims

1. A cable repair set comprising a crimpable bridge contact, the bridge contact comprising:
at least one elongated terminal portion, each terminal portion comprising first and second crimp portions arranged in series, the crimp portions comprising crimping wings,
two tool alignment portions, connected to the respective opposing ends of the elongated terminal portion, wherein each alignment portion comprises at least one tool alignment means.

2. The crimpable bridge contact according to claim 1, wherein the two tool alignment portions are detachably connected via breaking points.

3. The crimpable bridge contact according to claim 1 or 2, wherein the at least one tool alignment means comprises a through hole.

4. The crimpable bridge contact according to any one of the preceding claims, wherein the bridge contact comprises two elongated terminal portions arranged in parallel to each other.

5. The crimpable bridge contact according to any one of the preceding claims, wherein the bridge contact comprises a first axis of symmetry in the axial direction of the elongated terminal portion, with one crimp portion and one adjacent alignment portion being symmetrical to the respective other crimp portion and alignment portion.

6. The crimpable bridge contact according to the preceding claim, wherein the bridge contact comprises a second axis of symmetry, preferably at an angle of between 45 and 135 degrees to the first axis of symmetry.

7. The crimpable bridge contact according to any one of the preceding claims and a crimping tool, wherein the alignment means are adapted for aligning the crimping tool.

8. The crimpable bridge contact according to any one of the preceding claims comprising at least one stopping means, configured and dedicated to position the wire ends at the stopping means for alignment.

9. A method of repairing a signal transmission cable, comprising the steps of:
providing a cable repair set according to any one of the preceding claims;
providing a first signal transmission cable;
arranging a wire or wires of the first signal transmission cable in a first crimp portion;
providing a crimping tool;
aligning the crimping tool with the alignment means; and
crimping the wire or wires onto the first crimp portion by means of the crimping wings.

10. The method of repairing a signal transmission cable according to claim 9, wherein the bridge contact comprises two elongated terminal portions arranged in parallel to each other; and the signal transmission cable is a twisted pair cable comprising two wires, and wherein each wire is arranged in a respective first crimp portion of the two elongated terminal portions.

11. The method of repairing a signal transmission cable according to claim 10, further comprising the steps of:
providing a second signal transmission cable in form of a twisted pair cable comprising two wires, and arranging each wire of the second signal transmission cable in a respective second crimp portion of the two elongated terminal portions, to realize an electrical connection between the two signal transmission cables.

12. The method of repairing a signal transmission cable according to claim 11, wherein after the crimping step, the electrical impedance of two respectively electrically connected wires arranged in one terminal portion is the same as the electrical impedance of the respective other pair of electrically connected wires arranged in the parallel second terminal portion.

13. The method of repairing a signal transmission cable according to any one of the claims 9 to 12, wherein the signal transmission cable comprises a conductive shielding, preferably a metal foil shield, the method comprising the further steps of:
providing a ferrule and arranging the ferrule onto the cable jacket of one signal transmission cable; and thereafter folding the conductive shields over the ferrule.

14. The method of repairing a signal transmission cable according to claim 11 or 12, wherein the two signal transmission cables comprise a conductive shielding, preferably a metal foil shield, the method comprising the further steps of:
providing two ferrules and arranging a ferrule onto the cable jacket of each one of the two signal transmission cables;
thereafter folding the conductive shields over the ferrules; and then electrically connecting the two conductive shields of the two signal cables with each other to achieve shielding continuity.

15. The method of repairing a signal transmission cable according to the preceding claim 14, wherein the method comprises the steps of providing a conductive housing and housing the bridge contact so that the ferrules are conductively connected by the conductive housing to achieve the shielding continuity.
